(19)

**Europäisches Patentamt**
**European Patent Office**
**Office européen des brevets**

(11)  **EP 2 886 276 A1**

(12)  # EUROPEAN PATENT APPLICATION

(43) Date of publication:
**24.06.2015 Bulletin 2015/26**

(21) Application number: **13460085.7**

(22) Date of filing: **19.12.2013**

(51) Int Cl.:
*B27K 3/16* *(2006.01)*        *B05D 7/08* *(2006.01)*
*C09D 7/12* *(2006.01)*        *C09D 5/32* *(2006.01)*
*C08K 3/00* *(2006.01)*        *C08K 3/22* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(60) Divisional application:
**15001456.1**

(71) Applicant: **Instytut Technologii Drewna**
**60-654 Poznan (PL)**

(72) Inventors:
- **Nowaczyk-Organista, Magdalena**
  **61-153 (PL)**
- **Oleszek, Tomasz**
  **62-028 Kozieg?owy (PL)**
- **PR?DZY?SKI, W?odzimierz**
  **60-467 Pozna? (PL)**
- **Krzoska-Adamczak, Zofia**
  **61-376 Pozna? (PL)**

(74) Representative: **Piatkowska, Elzbieta**
**Kancelaria Patentowa**
**Skorzewo, ul. Truskawkowa 12**
**60-185 Poznan (PL)**

(54)  **Method of wood surface against light and agent for implementation of this method**

(57)  The subject of invention is method of wood surface protection against light and agent for implementation of this method.

Method according to invention of wood surface protection against light consists in application onto wood surface of metal oxides selected from the group: praseodymium(III) oxide, praseodymium(IV) oxide, neodymium (III) oxide, yttrium oxide, erbium oxide or their mixtures.

In the second aspect the subject of invention is transparent lacquer containing lightfast water polymer adhesive and addition of lanthanide oxide selected from the group: praseodymium(III) oxide, praseodymium(IV) oxide, neodymium(III) oxide, erbium oxide or yttrium oxide or their mixtures or combinations.

EP 2 886 276 A1

**Description**

The subject of invention is method of wood surface protection against light and agent for implementation of this method, in particular transparent lacquer with addition of metal oxides.

Wood due to its decorative values is commonly used in furniture industry and indoor equipment industry in the form of solid boards or veneers. Colour and pattern of wood are significant elements having a bearing on the quality of offered products. Wood as a natural material is subject to many ageing processes caused by biotic and abiotic factors. One of the symptoms of wood ageing is colour change, which affects the aesthetics of wood products.

In indoor conditions, i.e. conditions found inside rooms behind window glass, light is the main factor influencing change of wood colour.

The colour of surface observed by human eye is a result of absorption, dispersion and reflection of electromagnetic radiation within the range of visible light against wood surface. Colour of wood, similarly to its chemical composition, depends on the species, age, and climatic zone from which the tree originates. The wood of domestic tree species is characterised by colour similar to white (e.g. maple), yellow (e.g. birch), brown (e.g. oak), red (e.g. sweet cherry), green (e.g. locust tree), and black (e.g. walnut). The wood of non-heartwood species is characterised by more or less even colour throughout the cross section. The only visible difference is that between brighter early wood and darker late wood. In the case of heartwood species a clear difference between darker heartwood and bright sapwood is visible on the cross section.

Chromophore groups present in wood absorb light well when exposed, especially for a long time, to UV and UV/VIS radiation, and initiate processes of photochemical degradation of wood surface, especially photo-oxidation of lignin compounds. As a result of photochemical reactions occurring on wood surface various colour effects are observed. For instance birch wood tends to darken; whilst walnut wood exposed to light brightens. Exposure of wood to light also results in change of chromatic components of colour, mainly due to photochemical changes in the structure of lignin, which in effect lead to yellowing of wood. The slightest changes are observed in the direction of the chromatic component of colour depicting the share of red within the colour of sample's surface.

Non-lacquered surface of wood is matt, porous and prone to getting dirty. It is also damaged easily due to environmental factors or human actions. Therefore, in order to improve the aesthetics and decorative values as well as protection of wooden elements, used in furniture industry and indoor equipment industry, against mechanical damage wood surface is protected with various types of lacquers. To preserve the natural look of wood surface transparent lacquers, both colour and colourless, are applied. Generally, pure resins contained in transparent lacquers cannot protect wood surface against light; therefore lacquer composition contains various absorbers of UV radiation.

Agents improving the stability of wood surface colour exposed to light generally can be divided into organic and inorganic absorbers. Organic absorbers encompass in particular benzophenones, benzotriazoles, triazines, oxanilides, and cyanoacrylates. Absorptive properties of these absorbers depend on the substituents found in these compounds. During their useful life organic UV absorbents degrade, which makes them less effective after some period of usage.

The second group of UV absorbers consists of inorganic compounds, mainly metal oxides, which are characterised by refraction coefficients that are much higher than those characterising polymers used as lacquer basis. Amongst inorganic metal oxides used in furniture industry as colour stabilisers one will find titanium(IV) oxide, cerium(IV) oxide, zinc oxide, and iron(III) oxide. The use of metal oxides whose particles are measured in nanometric scale makes it possible to keep lacquer coatings transparent, thanks to which the lacquer composition is suitable for finishing of wood surface and preserving the wood pattern at the same time. The use of lacquer products containing metal oxides whose particles' size exceeds nanometric scale results in creating of nontransparent lacquer coating.

It is known that inorganic UV absorbers on the basis of commonly used light zinc and titanium oxides, whose particles' size is measured in nanometric scale, are used. These lacquers effectively improve lightfastness of bright wood species, such as birch, which changes colour mainly due to exposure to UV light range. In the case of dark wood species use of zinc and titanium oxides, despite an improvement in surface lightfastness, generally results in blurring the wood pattern, which is considered a negative aesthetic effect in furniture industry. The larger the size of particles is, the greater the whitening of coatings is, i.e. the loss of wood pattern clarity. With the view of eliminating this negative effects, lacquers containing less oxides in the lacquer composition are used, which in turn results in lesser ability to stabilise the colour of finished furniture wooden element exposed to light.

Organic and inorganic UV absorbers available on the market are characterised by different effectiveness of protection of finished wooden elements against light. This effectiveness depends on the wood species coated with lacquer. The same composition absorber-lacquer applied on various wood species can bring diametrically opposed results, for instance in the case of one wood species it improves the finished surface lightfastness; whilst in the case of the other species it lowers lightfastness. The effectiveness of wood protection against light depends inter alia on factors such as the type of lacquer product, the type of light projected onto the surface finished with transparent lacquer, and time of exposure to light. Therefore, proper selection of absorber, taking into consideration the lacquer and wood species, is very important in order to obtain satisfying effect for given irradiation parameters.

The goal of invention was to develop method of wood surface protection against light, where at the same time a clear wood surface pattern would be preserved, as well as to develop agent for implementation of the method.

In the process of research on the improvement of wood surface lightfastness it was unexpectedly found that lanthanides oxides and yttrium oxide effectively protect wood surface against light.

The subject of invention is method of wood surface protection against light consisting in application onto wood surface of metal oxides selected from the group: praseodymium(III) oxide, praseodymium(IV) oxide, neodymium(III) oxide, yttrium oxide, erbium oxide or their mixtures or combinations. Mixtures are understood as mixtures of oxides, and combinations are understood as a multi-layer system in which a single layer contains only one oxide and the second or consecutive oxide is contained in the second or consecutive layer. Oxides are applied onto wood surface in the form of impregnant or as lacquer component or both ways.

In the first variant method according to invention consists in application onto the surface of wood, which is to be lacquered, of an impregnating composition containing water or organic solvent, favourably dipropylene glycol monomethyl ether, and at least one lanthanide oxide selected from the group: praseodymium(III) oxide, praseodymium(IV) oxide, neodymium(III) oxide, erbium oxide or yttrium oxide. The impregnating composition contains oxide in an amount of 5-20 weight percent in relation to the solvent, favourably 10%. The impregnating composition is applied by a freely chosen method, favourably by spraying or pouring method. Once the impregnant is applied, wooden elements are dried at a temperature not exceeding 30°C in order to remove solvent from wood. The impregnant is applied onto wood surface in an amount corresponding to the content of lanthanide oxide from 0.2 to 5.0 g/m$^2$. Favourably lanthanide oxide should be applied onto wood surface in an amount ranging from 0.4 to 4.0 g/m$^2$, and most favourably in an amount ranging from 1.0 to 2.0 g/m$^2$. Dry, according to organoleptic assessment, wood surface is coated with freely chosen transparent lacquer, most favourably with water-dilutable lacquer on the basis of acrylic resins. Favourably thickness of the lacquer applied should range from 70 to 90 $\mu$m. Favourably lacquer should be applied as few layers. The method according to invention envisages use of oxides comminuted to particles of a size not exceeding 100 nm, favourably smaller than 50 nm, and most favourably smaller than 30 nm.

In the second variant method according to invention consists in application onto wood surface of transparent lacquer, most favourably water-dilutable lacquer on the basis of acrylic resins, containing addition of yttrium oxide or lanthanide oxide selected from the group: praseodymium(III) oxide, praseodymium(IV) oxide, neodymium(III) oxide, erbium oxide or their mixture, or combination of oxides in particular lacquer layers.

Lacquer can be applied as a single layer; however it is favourable to apply several layers, of which at least one contains metal oxides. Surface protected with lacquer containing metal oxides can be considered a finished product, but it can also be considered a basis for other lacquer coatings in order to give finished product not only lightfastness, but also other properties such as: increased resistance to mechanical factors, especially to abrasion, impact, and scratching.

The method according to this variant of invention envisages application of lacquers onto the surface of wood, which is to be protected, in such an amount that the total amount of lanthanide oxides or yttrium oxide ranged from 0.5 to 4.0 g/m$^2$, favourably from 1.0 to 2.0 g/m$^2$.

In the method according to invention lanthanides oxides or yttrium oxide are used after they have been comminuted to particles of a size not exceeding 100 nm, favourably smaller than 50 nm, and most favourably smaller than 30 nm.

In order to effectively perform the lacquering process (application of lacquer onto wood surface) it is favourable to use lacquers containing from 0.5 to 6.0 weight percent, most favourably 2.0-4.0 weight percent, of lanthanide or yttrium oxide converted into lacquer dry mass. The content of oxides in lacquer is selected in such a way that after lacquer application the assumed amount of oxides per 1 m$^2$ is obtained, i.e. in an amount ranging from 0.5 to 4.0 g/m$^2$, favourably from 1.0 to 2.0 g/m$^2$.

In the third variant method according to invention consists in application onto wood surface of lanthanides oxides or yttrium oxide, and then application of transparent lacquer containing lanthanides oxides or yttrium oxide.

At the first stage an impregnating composition composed of water or organic solvent, favourably dipropylene glycol monomethyl ether, and at least one lanthanide oxide selected from the group: praseodymium(III) oxide, praseodymium(IV) oxide, neodymium(III) oxide, erbium oxide or yttrium oxide, is applied onto wood surface. The impregnating composition contains oxide in an amount of 5-20 weight percent in relation to the solvent, favourably 10%. The impregnating composition is applied by a freely chosen method, favourably by spraying or pouring method. Once the impregnant is applied, wooden elements are dried at a temperature not exceeding 30°C in order to remove solvent from wood. The impregnant is applied onto wood surface in an amount corresponding to the content of lanthanide oxide or yttrium oxide ranging from 0.2 to 5.0 g/m$^2$. Favourably lanthanide oxide or yttrium oxide should be applied onto wood surface in an amount ranging from 0.4 to 4.0 g/m$^2$, and most favourably in an amount ranging from 1.0 to 2.0 g/m$^2$.

At the second stage wood surface impregnated at the first stage and dry, according to organoleptic assessment, is coated with transparent lacquer, most favourably with water-dilutable one on the basis of acrylic resins, containing addition of lanthanide oxide selected from the group: praseodymium(III) oxide, praseodymium(IV) oxide, neodymium(III) oxide, erbium oxide or yttrium oxide or their mixture, or combination of oxides in particular lacquer layers.

Lacquer can be applied as a single layer; however it is favourable to apply several layers, of which at least one contains metal oxides. Surface protected with lacquer containing metal oxides can be considered a finished product, but it can also be considered a basis for other lacquer coatings in order to give finished product not only lightfastness, but also other properties such as: increased resistance to mechanical factors, especially to abrasion, impact, and scratching.

The method according to this variant of invention envisages application of an impregnating composition and lacquers onto the surface of wood, which is to be protected, in such an amount that the total amount of lanthanide oxides and/or yttrium oxide ranges from 0.5 to 4.0 $g/m^2$, favourably from 1.0 to 2.0 $g/m^2$.

In the method according to invention lanthanides oxides or yttrium oxide are used after they have been comminuted to particles of a size not exceeding 100 nm, favourably smaller than 50 nm, and most favourably smaller than 30 nm.

In order to effectively perform the lacquering process (application of lacquer onto wood surface) it is favourable to use lacquers containing from 0.5 to 6.0 weight percent, favourably 2.0-4.0 weight percent, of lanthanide or yttrium oxide converted into lacquer dry mass. The content of oxides in lacquer is selected in such a way that after lacquer application the assumed amount of oxides per 1 $m^2$ is obtained, i.e. in an amount ranging from 0.5 to 4.0 $g/m^2$, favourably from 1.0 to 2.0 $g/m^2$.

In the second aspect the subject of invention is transparent lacquer containing lightfast water polymer adhesive selected from the group: acrylic dispersions, polyurethane dispersions; and addition of lanthanide oxide selected from the group: praseodymium(III) oxide, praseodymium(IV) oxide, neodymium(III) oxide, erbium oxide or yttrium oxide or their mixtures. Lacquer according to invention contains from 0.5 to 6.0 weight percent, favourably 2.0-4.0 weight percent, of lanthanide oxide converted into lacquer dry mass. Favourably lacquer according to invention contains wetting-dispergating agent allowed to be used for water-dilutable lacquer dispersions. Wetting-dispergating agent is used in a proportion to metal oxide ranging from 5:1 to 20:1, favourably 10:1.

Lanthanides oxides contained in lacquer are comminuted to particles of a size not exceeding 100 nm, favourably smaller than 50 nm, and most favourably smaller than 30 nm.

Depending on the thickness of the lacquer coating applied on a finished product, one uses lacquers containing a proper amount of lanthanide oxide in such a way that after application of the lacquer the content of the oxides in the lacquer ranges from 0.5 to 4.0 $g/m^2$, favourably from 1.0 to 2.0 $g/m^2$.

Wood surfaces protected using the method according to invention are characterised by lightfastness which is higher than or similar to that of elements finished with lacquers containing UV absorbers on the basis of inorganic compounds such as titanium and zinc oxides. An additional value lies in the fact that thanks to use of oxides according to invention the effect of coating whitening can be minimised, which is especially important in the case of dark wood species. Use of the newly developed method of wood protection against light makes it possible to obtain finished surface characterised by a clear wood pattern, which undoubtedly is an important factor when it comes to assessment of the aesthetics of furniture surface fmishing.

The examples present evidence confirming the effectiveness of the method of protection of wood surface against light using the method according to invention.

The colour of the tested surfaces prior to and after irradiation was measured using a spectrophotometer ELREPHO 2000 and colour co-ordinates were recorded in the CIE Lab system. The measurements were performed according to the ISO 7724:1984 standard: Paints and varnishes - Colorimetry, Part 1: Principles, Part 2: Colour measurement, Part 3: Calculation of colour differences.
The calculations were based on the following formula (also referred to in ISO 7724 standard):

$$\Delta E^* = \sqrt{(\Delta L^*)^2 + (\Delta a^*)^2 + (\Delta b^*)^2}$$

The colour sphere ($L^*$, $a^*$, $b^*$) is described as a tridimensional system of colour co-ordinates (axes $L^*$, $a^*$, and $b^*$). Axis $a^*$ depicts the share of green or red colour within the analysed colour; whilst hues of green take on negative values, and hues of red positive values. Axis $b^*$ depicts the share of blue or yellow colour within the analysed colour; whilst hues of blue take on negative values, and hues of yellow positive values. Axis $L^*$ describes colour brightness within the value range from 0 to 100. $L^*=100$ means that a given colour is close to white, and $L^*= 0$ that a colour is close to black.

A change in brightness $\Delta L^*$ takes on a negative value when due to irradiation the tested sample darkened. On the other hand, when the sample brightened, $\Delta L^*$ takes on a positive value.

Generally, wood surface colour is described by positive values of chromatic components of colour $a^*$ and $b^*$.

Hence, in the discussed examples, a negative value of change of chromatic co-ordinate Δa* means that due to irradiation the tested sample is less red. On the other hand, when the sample is more red, then Δa* takes on a positive value. The situation is similar in the case of component Δb* difference.

Colour measurement parameters:

- spectrophotometer ELREPHO 2000,
- light source D65,
- geometry d/10°
- number of samples 3-6
- number of measurement points on one sample - 6

However, it should be kept in mind that identical measurements for identically prepared samples of the same wood species may differ to some degree in the case the wood originated from a different tree or production technologies used to obtain veneer prior to the tests differed.

**Veneers used for testing:**

**D1** - Oak wood veneer (*Quercus robur* L.) of the thickness of 0.9 mm, produced by slicing method,

**D2** - Sweet cherry veneer (*Prunus avium* L.) of the thickness of 0.9 mm, produced by slicing method.

Tables 1 and 2 give the characteristics of the veneers used.

Table 1

| Origin and conditions of wood creation | | | | |
|---|---|---|---|---|
| Veneer | Region of origin: nature and forestry region | Estimated tree age [years] | Cooking conditions | Humidity [%] |
| D1 | Mazursko-Podlaska Region, Region of Mazurska Plain | 80-100 | 72 h, 75 °C | 7.9-8.9 |
| D2 | Central Poland Upland Region Roztocze Region | 60-80 | 36h, 60°C | 7.2-8.4 |

Table 2

| Colour co-ordinates before testing | | | |
|---|---|---|---|
| Veneer characteristics | | Wood species | |
| | | D1 | D2 |
| Colour co-ordinates*) | L* min max | 54.43 51.27 57.31 | 68.96 67.41 70.04 |
| | a* min max | 7.4 6.6 8.2 | 10.7 9.3 12 |
| | b* min max | 14.3 13.2 15.7 | 20.8 19.1 22.1 |
| *) mean value from 20 measurement points | | | |

**Impregnating compositions:**

I1 - dipropylene glycol monomethyl ether CAS:34590-94-8 and 10% of Praseodymium Oxide 4451RE by NanoAmor Company,

I2 - dipropylene glycol monomethyl ether CAS:34590-94-8 and 10% of Neodymium Oxide 3911RE by NanoAmor Company,

I3 - dipropylene glycol monomethyl ether CAS:34590-94-8 and 10% of Erbium Oxide 2330RE by NanoAmor Company,

I4 - dipropylene glycol monomethyl ether CAS:34590-94-8 and 10% of Yttrium Oxide 5610ZQ by NanoAmor Company,

15 - dipropylene glycol monomethyl ether CAS:34590-94-8 and 10% of Titanium Oxide 5480MR by NanoAmor Company.

The impregnating compositions were prepared in an ultrasonic homogeniser SONICS VCX 500. Parameters of ultrasonic homogenisation: time: 20 min., temp. max 40°C, impulse length 3 sec., interval length 2 sec., amplitude 70%, standard tip 3/4".

**Lacquer compositions:**

The amounts of oxides are given converted into dry mass.

**Lacquer 1-** lacquer EA 635, by Sherwin Williams Company

**Lacquer 2 -** lacquer EA 635+ 2% $TiO_2$ - Titanium Oxide 5480MR by NanoAmor Company

**Lacquer 3-** lacquer EA635 + 4% $TiO_2$ - Titanium Oxide 5480MR by NanoAmor Company

**Lacquer 4 -** lacquer EA 635+ 2% $Pr_{6O11}$- Praseodymium Oxide 4451RE by NanoAmor Company

**Lacquer 5 -** lacquer EA635 + 4% $Pr_6O_{11}$ - Praseodymium Oxide 4451RE by NanoAmor Company

**Lacquer 6 -** lacquer EA635 + 2% $Nd_2O_3$ - Neodymium Oxide 3911RE by NanoAmor Company

**Lacquer 7 -** lacquer EA635 + 4% $Nd_2O_3$ - Neodymium Oxide 3911RE by NanoAmor Company Lacquer preparation procedure (lacquers 2-7).

At the first stage a masterbatch containing wetting-dispergating agent (Anti[®]-Terra 250 by BYK Chemie GmbH) and a proper amount of lanthanide oxide or titanium oxide was prepared. The wetting-dispergating agent was used in a proportion to lanthanide oxide or titanium oxide in a proportion of 10:1. The composition was prepared in a homogeniser IKA T25 digital Ultra Turrax, tip S 25N-10G at a velocity of 3200-20000 rotations/min.
At the second stage a proper amount of lacquer EA 635, by Sherwin Williams Company, was homogenised with a proper amount of the masterbatch in an ultrasonic homogeniser SONICS VCX 500. Parameters of ultrasonic homogenisation - SONICS - times: 20 min, temp. max 40°C, impulse length 3 sec., interval length 2 sec., amplitude 70%, standard tip 3/4".

Example 1

4 layers of lacquer 1 were applied onto the surface of sample D1.

Drying of individual lacquer layers - 70°C for 10 minutes in a dryer with air circulation, and then at the temperature of 20° until absolutely dry, which is determined by organoleptic method. Results of measurements are given in chart 1 and table 3.

Example 2

4 layers of lacquer were applied onto the surface of sample D1:

- one layer of lacquer 1,
- two layers of lacquer 2 containing in total 1.0 g/m$^2$ of metal oxide,
- one layer of lacquer 1.

Individual layers were dried as per example 1.
Results of measurements are given in chart 1 and table 3.

Example 3

4 layers of lacquer were applied onto the surface of sample D1:

- one layer of lacquer 1,
- two layers of lacquer 4 containing in total 1.0 g/m$^2$ of metal oxide,
- one layer of lacquer 1.

Individual layers were dried as per example 1.
Results of measurements are given in chart 1 and table 3 .

Example 4

4 layers of lacquer were applied onto the surface of sample D1:

- one layer of lacquer 1,
- one layer of lacquer 4 containing 0.5 g/m$^2$ of metal oxide,
- one layer of lacquer 6 containing 0.5 g/m$^2$ of metal oxide,
- one layer of lacquer 1.

Individual layers were dried as per example 1.
Results of measurements are given in chart 1 and table 3.

Example 5

4 layers of lacquer were applied onto the surface of sample D1:

- one layer of lacquer 1,
- one layer of lacquer 4 containing 0.5 g/m$^2$ of metal oxide,
- one layer of lacquer 2 containing 0.5 g/m$^2$ of metal oxide,
- one layer of lacquer 1.

Individual layers were dried as per example 1.
Results of measurements are given in chart 1 and table 3.
Chart 1 and table 3 present comparative data for samples as per examples 1-5 irradiated with a UV 340 lamp of light intensity of 0.5 W/m$^2$, temp. BP 38°C, time of exposure to light 100 h. The lightfastness was assessed prior to irradiation and after 1, 5, 25, 50, 75, and 100 h of irradiation.

Chart 1

Table 3

| Time of exposure to light [h] | Example 1 | | | | Example 2 | | | | Example 3 | | | |
|---|---|---|---|---|---|---|---|---|---|---|---|---|
| | ΔL* | Δa* | Δb* | ΔE* | ΔL* | Δa* | Δb* | ΔE* | ΔL* | Δa* | Δb* | ΔE* |
| 0 | 0.00 | 0.00 | 0.00 | 0.00 | 0.00 | 0.00 | 0.00 | 0.00 | 0.00 | 0.00 | 0.00 | 0.00 |
| 1 | -1.93 | 0.45 | -0.03 | 1.99 | -1.72 | 0.00 | -0.58 | 1.83 | -0.17 | -0.30 | -0.37 | 0.54 |
| 5 | -3.47 | 0.65 | 0.47 | 3.57 | -3.63 | 0.03 | -1.40 | 3.90 | -0.43 | -0.53 | -0.40 | 0.83 |
| 25 | -4.89 | 1.40 | 2.17 | 5.53 | -5.40 | 0.33 | -1.52 | 5.63 | -0.49 | -0.65 | -0.53 | 0.99 |
| 50 | -4.96 | 1.87 | 3.12 | 6.15 | -6.20 | 0.55 | -1.52 | 6.43 | -0.55 | -0.68 | -0.42 | 1.00 |
| 75 | -2.59 | 2.27 | 5.40 | 6.42 | -5.29 | 1.18 | 0.38 | 5.46 | 0.10 | -0.30 | 0.70 | 0.80 |
| 100 | -2.05 | 2.02 | 4.67 | 5.49 | -5.99 | 1.27 | -0.43 | 6.16 | 0.10 | -0.28 | 0.42 | 0.55 |

| Time of exposure to light [h] | Example 4 | | | | Example 5 | | | |
|---|---|---|---|---|---|---|---|---|
| | ΔL* | Δa* | Δb* | ΔE* | ΔL* | Δa* | Δb* | ΔE* |
| 0 | 0.00 | 0.00 | 0.00 | 0.00 | 0.00 | 0.00 | 0.00 | 0.00 |
| 1 | -1.04 | -0.22 | -0.53 | 1.20 | -0.95 | -0.27 | -0.42 | 1.08 |
| 5 | -1.90 | -0.33 | -0.78 | 2.09 | -1.91 | -0.48 | -1.10 | 2.27 |
| 25 | -2.27 | -0.17 | -0.28 | 2.31 | -2.78 | -0.63 | -1.43 | 3.20 |
| 50 | -2.15 | 0.05 | 0.57 | 2.23 | -3.29 | -0.70 | -1.53 | 3.71 |
| 75 | -0.92 | 0.62 | 2.08 | 2.38 | -2.74 | -0.23 | -0.47 | 2.82 |
| 100 | -0.81 | 0.53 | 1.88 | 2.14 | -3.10 | -0.28 | -1.03 | 3.30 |

It stems from table 3 and chart 1 that the surface finished with lacquer containing praseodymium oxide in the second and third lacquer layer (example 3) is characterised by very little changes of all colour co-ordinates (ΔL*, Δa*, Δb*) compared to the surfaces finished with lacquer EA and lacquer with EA+2% share of $TiO_2$ (example 2); hence it is characterised by very high resistance to light, i.e. ΔE* ≤ 1.0).

The surface finished with lacquer containing praseodymium oxide in the second layer and neodymium oxide in the third layer of lacquer (example 4) is characterised by much lesser changes of colour co-ordinates ΔL* and Δa* compared to the surfaces finished with pure lacquer and lacquer with a 2% share of $TiO_2$, which results in high resistance to light (2.0 < ΔE* < 3.0). Substitution of praseodymium oxide with neodymium oxide in one layer results in brighter surface finishing; whilst at the same time clear wood pattern is preserved.

The surface fmished with lacquer containing praseodymium in the second layer of lacquer and titanium oxide in the third layer of lacquer (example 5) is characterised by lesser changes of all colour co-ordinates ($\Delta L^*$, $\Delta a^*$, $\Delta b^*$) compared to the surface finished with pure lacquer and surface finished with lacquer composition containing only titanium oxide; hence this surface throughout the whole irradiation time demonstrates enhanced resistance to light compared to pure lacquer or lacquer with a 2 % share of sole titanium oxide; however, substitution of neodymium oxide with titanium oxide in one lacquer layer, as in example 4, lowers lightfastness ($3.0 < \Delta E^* < 4.0$).

Example 6

Impregnating composition I1 was applied using a brush onto the surface of sample D1. Then it was dried at the temperature of 30 °C (dryer without air circulation) and stuck on a MDF of the thickness of 3 mm. Once ether was evaporated, the content of oxide on the wood surface was 1.0 g/m$^2$.

Examples 7-10

Proceeding as in example 6, the surface of samples D1 was coated with respectively:

- example 7 composition I2,
- example 8 composition I3,
- example 9 composition I4,
- example 10 composition 15

Once ether was evaporated, the content of oxide on the wood surface was 1.0 g/m$^2$.

Example 11

Non-impregnated oak veneer stuck on a MDF of the thickness of 3 mm.
Chart 2 and table 4 present comparative data for samples as per examples 6-11 irradiated with a xenon lamp of wave range 320-800 nm and light intensity 550 W/m$^2$, temp. BST 45°C, irradiation time 100 h. The lightfastness was assessed prior to irradiation and consecutively after 1, 5, 25, 50, 75, and 100 h of irradiation.
It stems from data given in table 4 and chart 2 that the surfaces impregnated with metal oxides, examples 6-9, throughout the whole range of irradiation times are characterised by much lesser values of colour change compared to non-impregnated wood (example 11) and wood impregnated with titanium oxide (example 10). After irradiation impregnated wood (examples 6-9) was less yellowed (lower values of $\Delta b^*$) compared to non-impregnated wood. Data in table 4 also suggests that the surface impregnated with neodymium oxide and erbium oxide (examples 7 and 8) was characterised by lower values of brightness co-ordinate change ($\Delta L^*$). As per examples 7 and 8 after 100 h of irradiation the values of wood brightness co-ordinate changes were respectively $\Delta L^*=0.96$ and $\Delta L^*=1.32$; whilst $\Delta L^*$ for non-impregnated wood surface (example 11) was -6.09.

Chart 2

Table 4

| Time of exposure to light [h] | Example 6 | | | | Example 7 | | | | Example 8 | | | |
|---|---|---|---|---|---|---|---|---|---|---|---|---|
| | ΔL* | Δa* | Δb* | ΔE* | ΔL* | Δa* | Δb* | ΔE* | ΔL* | Δa* | Δb* | ΔE* |
| 0 | 0.00 | 0.00 | 0.00 | 0.00 | 0.00 | 0.00 | 0.00 | 0.00 | 0.00 | 0.00 | 0.00 | 0.00 |
| 1 | -1.26 | -0.50 | -1.23 | 1.84 | -2.59 | -0.19 | -1.24 | 2.88 | -2.58 | -0.49 | -1.68 | 3.12 |
| 5 | -1.16 | -0.72 | -0.77 | 1.60 | -3.37 | -0.28 | -0.37 | 3.40 | -3.47 | -0.53 | -0.90 | 3.63 |
| 25 | 0.26 | -1.19 | 0.17 | 1.35 | -2.96 | -0.37 | 0.63 | 3.06 | -3.20 | -0.54 | 0.54 | 3.33 |
| 50 | 2.56 | -1.27 | 1.38 | 3.28 | -0.84 | -0.35 | 1.21 | 1.89 | -0.82 | -0.58 | 1.73 | 2.40 |
| 75 | 3.63 | -1.86 | 0.93 | 4.22 | 0.08 | -0.73 | -0.01 | 1.09 | 0.14 | -1.14 | 0.62 | 1.99 |
| 100 | 4.69 | -2.23 | 0.61 | 5.25 | 0.96 | -0.94 | -0.66 | 1.61 | 1.32 | -1.46 | -0.03 | 2.46 |

| Time of exposure to light [h] | Example 9 | | | | Example 10 | | | | Example 11 | | | |
|---|---|---|---|---|---|---|---|---|---|---|---|---|
| | ΔL* | Δa* | Δb* | ΔE* | ΔL* | Δa* | Δb* | ΔE* | ΔL* | Δa* | Δb* | ΔE* |
| 0 | 0.00 | 0.00 | 0.00 | 0.00 | 0.00 | 0.00 | 0.00 | 0.00 | 0.00 | 0.00 | 0.00 | 0.00 |
| 1 | -1.57 | -0.84 | -1.54 | 2.36 | -4.79 | 0.40 | -1.02 | 4.92 | -3.42 | -0.11 | -1.27 | 3.65 |
| 5 | -1.66 | -1.13 | -1.04 | 2.27 | -7.97 | 0.19 | -0.55 | 8.00 | -5.51 | -0.16 | -0.43 | 5.53 |
| 25 | -0.24 | -1.71 | 0.16 | 1.80 | -7.30 | 0.29 | 1.09 | 7.39 | -5.51 | 0.66 | 4.02 | 6.87 |
| 50 | 2.39 | -1.95 | 1.29 | 3.50 | -6.52 | 0.54 | 4.58 | 8.00 | -6.93 | 0.46 | 4.17 | 8.11 |
| 75 | 3.81 | -2.70 | 0.36 | 4.71 | -4.98 | 0.92 | 6.67 | 8.39 | -6.32 | 0.76 | 5.28 | 8.28 |
| 100 | 5.07 | -3.10 | -0.25 | 5.97 | -4.90 | 0.66 | 6.20 | 7.95 | -6.09 | 0.67 | 5.48 | 8.23 |

Example 12

A. Impregnation

Impregnating composition I1 was applied using a brush onto the surface of veneer D2. Then it was dried at the temperature of 30 °C (dryer without air circulation). Once ether was evaporated, the content of oxide on the wood surface was 1.0 g/m$^2$. So prepared veneer was stuck on a MDF of the thickness of 3 mm.

B. Lacquering

Dried (organoleptic assessment) sample of impregnated veneer D2 was lacquered. Four layers of lacquer 1 were applied consecutively.
Individual layers were dried as per example 1.
Results of measurements are given in chart 3 and table 5.

Example 13

Four layers of lacquer were consecutively applied on veneer impregnated as in example 12A:

- first layer - lacquer 1,
- second and third layer - lacquer 2 containing in total 1.0 g/m$^2$ of metal oxide,
- fourth layer - lacquer 1.

Individual layers were dried as per example 1.
Results of measurements are given in chart 3 and table 5.

Example 14

Four layers of lacquer were consecutively applied on veneer impregnated as in example 12A:

- first layer - lacquer 1,
- second and third layer - lacquer 4 containing in total 1.0 g/m$^2$ of metal oxide,
- fourth layer - lacquer 1.

Individual layers were dried as per example 1.
Results of measurements are given in chart 3 and table 5.

Example 15

Four layers of lacquer were consecutively applied on veneer impregnated as in example 12A:

- first layer - lacquer 1,
- second layer - lacquer 4 containing 0.5 g/m$^2$ of metal oxide,
- third layer - lacquer 2 containing 0.5 g/m$^2$ of metal oxide,
- fourth layer - lacquer 1.

Individual layers were dried as per example 1.
Results of measurements are given in chart 3 and table 5.

Example 16

Four layers of lacquer were consecutively applied on veneer impregnated as in example 12A:

- first layer - lacquer 1,
- second layer - lacquer 4 containing 0.5 g/m$^2$ of metal oxide,
- third layer - lacquer 6 containing 0.5 g/m$^2$ of metal oxide,
- fourth layer - lacquer 1.

Individual layers were dried as per example 1.
Results of measurements are given in chart 3 and table 5.

Example 17

Four layers of lacquer 1 were applied onto the surface of sample D2.
Individual layers were dried as per example 1.
Results of measurements are given in chart 3 and table 5.
Chart 3 and table 5 present comparative data for samples as per examples 12-17 irradiated with a xenon lamp of wave range 320-800 nm and light intensity 550 W/m$^2$, temp. BST 45°C, irradiation time 100 h. The lightfastness was assessed prior to the action and consecutively after 1, 5, 25, 50, 75, and 100 h of irradiation.
Data given in table 5 and chart 3 suggests that impregnated wood coated with clear lacquer (example 12) is characterised by higher resistance to colour change (lesser changes of $\Delta E^*$ values) compared to non-impregnated wood coated with clear lacquer (example 17).
Results for examples 13-16 confirm that the change of wood colour is lesser in the case of impregnated wood coated with lacquers with additions of metal oxides compared to impregnated wood coated with clear lacquer (example 12). Lesser changes of $\Delta E^*$ values result mainly from lesser changes of brightness ($\Delta L^*$).
Amongst the impregnated sweet cherry wood samples, which were then protected with various lacquer compositions, the highest resistance to light (the least values of colour changes $\Delta E^*$) was observed in the case of wood protected with praseodymium oxide (example 14). The samples (example 15) of impregnated wood coated with lacquer composition, where in one layer lacquer containing praseodymium oxide (lacquer 4) and in the other lacquer containing titanium oxide (lacquer 2) was used, were characterised by lower lightfastness compared to example 14.
Similar results were obtained in the case, where lacquer containing titanium oxide (example 16) was substituted with lacquer containing neodymium oxide (lacquer 6); however, in this case, despite the comparable protection against light, one obtains a better visual effect, for coating without titanium oxide is more transparent.

Chart 3

Table 5

| Time of exposure to light [h] | Example 12 | | | | Example 13 | | | | Example 14 | | | |
|---|---|---|---|---|---|---|---|---|---|---|---|---|
| | ΔL* | Δa* | Δb* | ΔE* | ΔL* | Δa* | Δb* | ΔE* | ΔL* | Δa* | Δb* | ΔE* |
| 0 | 0.00 | 0.00 | 0.00 | 0.00 | 0.00 | 0.00 | 0.00 | 0.00 | 0.00 | 0.00 | 0.00 | 0.00 |
| 1 | -1.29 | -0.60 | -1.40 | 2.00 | -0.83 | -0.53 | -0.77 | 1.25 | -0.28 | -0.30 | -0.27 | 0.52 |
| 5 | -1.15 | -0.53 | -1.03 | 1.64 | -0.73 | -0.57 | -0.77 | 1.22 | -0.12 | -0.43 | -0.07 | 0.50 |
| 25 | 0.80 | -1.03 | -0.83 | 1.55 | 0.54 | -0.70 | -1.17 | 1.47 | 0.45 | -0.47 | 0.27 | 0.70 |
| 50 | 2.82 | -1.50 | -0.60 | 3.25 | 1.97 | -0.93 | -1.13 | 2.46 | 0.92 | -0.37 | 0.53 | 1.13 |
| 75 | 4.20 | -1.93 | -0.83 | 4.70 | 2.98 | -1.17 | -1.17 | 3.41 | 1.31 | -0.30 | 0.53 | 1.45 |
| 100 | 5.32 | -2.13 | -0.93 | 5.81 | 3.83 | -1.33 | -1.20 | 4.23 | 1.69 | -0.30 | 0.73 | 1.89 |

| Time of exposure to light [h] | Example 15 | | | | Example 16 | | | | Example 17 | | | |
|---|---|---|---|---|---|---|---|---|---|---|---|---|
| | ΔL* | Δa* | Δb* | ΔE* | ΔL* | Δa* | Δb* | ΔE* | ΔL* | Δa* | Δb* | ΔE* |
| 0 | 0.00 | 0.00 | 0.00 | 0.00 | 0.00 | 0.00 | 0.00 | 0.00 | 0.00 | 0.00 | 0.00 | 0.00 |
| 1 | -0.54 | -0.50 | -0.77 | 1.06 | -0.48 | -0.30 | -0.43 | 0.71 | -1.54 | -0.10 | -1.80 | 2.37 |
| 5 | -0.53 | -0.53 | -0.67 | 1.01 | -0.16 | -0.40 | -0.30 | 0.62 | -1.32 | 0.17 | -1.87 | 2.30 |
| 25 | 0.36 | -0.43 | -0.77 | 0.96 | 0.76 | -0.47 | -0.10 | 0.91 | 1.01 | -0.30 | -0.87 | 1.38 |
| 50 | 1.30 | -0.47 | -0.77 | 1.59 | 1.67 | -0.47 | 0.07 | 1.74 | 3.71 | -0.83 | -0.50 | 3.84 |
| 75 | 2.12 | -0.60 | -0.53 | 2.29 | 2.26 | -0.57 | 0.03 | 2.34 | 5.72 | -1.30 | -0.20 | 5.87 |
| 100 | 2.71 | -0.57 | -0.50 | 2.82 | 2.87 | -0.67 | 0.17 | 2.95 | 7.38 | -1.67 | -0.03 | 7.57 |

**Claims**

1. Method of wood surface protection against light, wherein the method consists in application onto wood surface of lanthanides oxides selected from the group: praseodymium(III) oxide, praseodymium(IV) oxide, neodymium(III) oxide, erbium oxide or their mixtures; in the form of impregnating mixture containing solvent and proper oxide.

2. Method according to claim 1, wherein oxides are applied in an amount corresponding to the content of lanthanide oxide from 0.2 to 5.0 $g/m^2$.

3. Method according to claim 2, wherein oxides are applied in an amount corresponding to the content of lanthanide oxide from 0.4 to 4.0 $g/m^2$.

4. Method according to claim 3, wherein oxides are applied in an amount corresponding to the content of lanthanide oxide from 1.0 to 2.0 $g/m^2$.

5. Method according to claim 1 or 2 or 3 or 4, wherein oxides are comminuted to particles of a size not exceeding 50 nm.

6. Method according to claim 5, wherein oxides are comminuted to particles of a size not exceeding 30 nm.

7. Method of wood surface protection against light, wherein the method consists in application onto wood surface of transparent lacquer, favourably water-dilutable, containing addition of yttrium oxide or lanthanide oxide selected from the group: praseodymium(III) oxide, praseodymium(IV) oxide, neodymium(III) oxide, erbium oxide or their mixtures or combination of the oxides in particular layers of lacquer.

8. Method according to claim 7, wherein oxides are applied in total amount, in all lacquer layers, corresponding to the content of lanthanide oxide from 0.2 to 5.0 $g/m^2$.

9. Method according to claim 8, wherein oxides are applied in an amount corresponding to the content of lanthanide oxide from 0.4 to 4.0 $g/m^2$.

10. Method according to claim 9, wherein oxides are applied in an amount corresponding to the content of lanthanide oxide from 1.0 to 2.0 $g/m^2$.

11. Method according to claim 7 or 8 or 9 or 10, wherein oxides are comminuted to particles of a size not exceeding 50 nm.

12. Method according to claim 11, wherein oxides are comminuted to particles of a size not exceeding 30 nm.

13. Method of wood surface protection against light, wherein the method consists in application onto wood surface of impregnating mixture containing solvent and yttrium oxide or lanthanide oxide selected from the group: praseodymium(III) oxide, praseodymium(IV) oxide, neodymium(III) oxide, erbium oxide or their mixtures, and then, once the impregnated surface has been dried, it is coated with a layer of transparent lacquer, favourably water-dilutable, containing addition of yttrium oxide or lanthanide oxide selected from the group: praseodymium(III) oxide, praseodymium(IV) oxide, neodymium(III) oxide, erbium oxide or their mixture, or combination of oxides in particular lacquer layers.

14. Method according to claim 13, wherein oxides are applied in total amount, in impregnant and lacquer or lacquers, corresponding to the content of lanthanide oxide from 0.2 to 5.0 $g/m^2$.

15. Method according to claim 14, wherein oxides are applied in an amount corresponding to the content of lanthanide oxide from 0.4 to 4.0 $g/m^2$.

16. Method according to claim 15, wherein oxides are applied in an amount corresponding to the content of lanthanide oxide from 1.0 to 2.0 $g/m^2$.

17. Method according to claim 13 or 14 or 15 or 16, wherein oxides are comminuted to particles of a size not exceeding 50 nm.

18. Method according to claim 17, wherein oxides are comminuted to particles of a size not exceeding 30 nm.

19. Transparent lacquer containing lightfast water polymer adhesive selected from the group: acrylic dispersions, polyurethane dispersions; and addition from 0.5 to 6.0 weight percent, converted into lacquer dry mass, of lanthanide oxide selected from the group: praseodymium(III) oxide, praseodymium(IV) oxide, neodymium(III) oxide, erbium oxide or yttrium oxide or their mixtures.

**20.** Lacquer according to claim 19, wherein the lacquer contains from 2.0 to 4.0 weight percent of lanthanide oxide.

**21.** Lacquer according to claim 19 or 20, wherein oxides are comminuted to particles of a size not exceeding 50 nm.

**22.** Lacquer according to claim 21, wherein oxides are comminuted to particles of a size not exceeding 30 nm.

**23.** Lacquer according to claim 19 or 20 or 21 or 22, wherein the lacquer additionally contains wetting-dispergating agent allowed to be used for water-dilutable lacquer dispersions.

**24.** Lacquer according to claim 23, wherein wetting-dispergating agent is used in a proportion wetting-dispergating agent: metal oxide from 5:1 1 to 20:1.

**25.** Lacquer according to claim 24, wherein wetting-dispergating agent is used in the proportion wetting-dispergating agent : metal oxide 10:1.

# EP 2 886 276 A1

**EUROPEAN SEARCH REPORT**

Application Number

EP 13 46 0085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 883 689 A (GRADEFF PETER S [US]) 28 November 1989 (1989-11-28) * claims 1, 4, 11, 13-14 * | 1-6 | INV. B27K3/16 B05D7/08 C09D7/12 |
| X | US 2002/022682 A1 (WALLACE PENNY JO [US] ET AL) 21 February 2002 (2002-02-21) | 7,11-13, 17,18 | C09D5/32 |
| A | * paragraphs [0021], [0023], [0064] * | 1,8-10, 14-16 | ADD. C08K3/00 C08K3/22 |
| X | DE 10 2004 027075 A1 (SE MA GES FUER INNOVATIONEN MB [DE]) 29 December 2005 (2005-12-29) * claims 1, 3; examples 1-2 * | 19-25 | |

TECHNICAL FIELDS SEARCHED (IPC)

B27K
B05D
C09D
C08K

The present search report has been drawn up for all claims

| Place of search | Date of completion of the search | Examiner |
|---|---|---|
| Munich | 31 October 2014 | Bjola, Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**Application Number**

EP 13 46 0085

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

[X] All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

EP 2 886 276 A1

Europäisches
Patentamt
European
Patent Office
Office européen
des brevets

**LACK OF UNITY OF INVENTION
SHEET B**

Application Number

EP 13 46 0085

The Search Division considers that the present European patent application does not comply with the requirements of unity of invention and relates to several inventions or groups of inventions, namely:

1. claims: 1-6

    method of wood impregnation employing a composition comprising lanthanides oxides of praseodymium, neodymium, or erbium oxide
    ---

2. claims: 7-18

    method of coating of wood employing a composition comprising yttrium oxide or lanthanides oxides of praseodymium, neodymium, or erbium oxide
    ---

3. claims: 19-25

    transparent lacquer comprising yttrium oxide or lanthanides oxides of praseodymium, neodymium, or erbium oxide
    ---

17

## ANNEX TO THE EUROPEAN SEARCH REPORT
## ON EUROPEAN PATENT APPLICATION NO.

EP 13 46 0085

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2014

| Patent document cited in search report | Publication date | Patent family member(s) | Publication date |
|---|---|---|---|
| US 4883689 A | 28-11-1989 | NONE | |
| US 2002022682 A1 | 21-02-2002 | CA 2388866 A1 | 26-04-2001 |
| | | EP 1238023 A1 | 11-09-2002 |
| | | JP 2003512498 A | 02-04-2003 |
| | | MX PA02004017 A | 25-09-2003 |
| | | TW 581797 B | 01-04-2004 |
| | | US 2002022682 A1 | 21-02-2002 |
| | | WO 0129139 A1 | 26-04-2001 |
| DE 102004027075 A1 | 29-12-2005 | NONE | |

EPO FORM P0459

For more details about this annex : see Official Journal of the European Patent Office, No. 12/82